# EUROPÄISCHE PATENTANMELDUNG

(11) **EP 4 573 924 A1**
(43) Veröffentlichungstag der Anmeldung: **25.06.2025**
(21) Anmeldenummer: 24221701.6
(22) Anmeldetag: 19.12.2024
(51) Int. Cl.: A23L 19/12

(54) **VERFAHREN ZUR HERSTELLUNG VON KARTOFFELTEIGFORMLINGEN**

(30) Priorität: 22.12.2023 DE 102023005316
(71) Anmelder: Burgis GmbH, 92318 Neumarkt (DE)
(72) Erfinder: Weiß, Christina, 92334 Berching (DE)
(74) Vertreter: Castell, Klaus

(57) **Zusammenfassung**

Bei einem Verfahren zur Herstellung von Kartoffelteigformlingen werden Kartoffeln erhitzt, daraus ein Teig hergestellt und aus dem Teig werden Kartoffelteigformlinge hergestellt, die verpackt werden. Die Kartoffelteigformlinge werden vor dem Verpacken bei unter 110 °C im Durchlauf gedämpft.

## Beschreibung

Die Erfindung betrifft ein Verfahren zur Herstellung von Kartoffelteigformlingen, bei dem Kartoffeln erhitzt werden, ein Teig hergestellt wird, dem Teig vor oder beim Mischen Kartoffelstärke und Wasser zugegeben wird, aus dem Teig Kartoffelteigformlinge hergestellt werden und die Kartoffelteigformlinge verpackt werden.

Ein derartiges Verfahren ist aus der WO 2023/011692 A1 bekannt. Bei dem bekannten Verfahren findet aufgrund des Dampfgehalts bei der Verwendung eines Kombidämpfers oder Spiralkochers eine geringe Wasserabnahme aus der Masse des Formteils von ca. 20 % statt. Um auch eine Wasseraufnahme möglichst zu vermeiden, wird die Garzeit möglichst kurz gehalten und es wurde erkannt, dass ein Temperaturbereich von 115 bis 145 °C und insbesondere von 120 bis 140 °C eine auseichende Verkleisterung bei weitgehend konstantem Wassergehalt in der Masse des Formteils bewirkt. Durch spezielle Temperatur- und Zeitfenster wurde erreicht, dass durch den zugeführten Wasserdampf die Austrocknung und Erhärtung des verkleisterten Rohlings ausbleibt und mit resultierender Verfestigung wurde im Zuge eines anschließenden Auskühlvorgangs ein Wasserverlust erreicht.

Davon ausgehend liegt der Erfindung die Aufgabe zugrunde, dass gattungsgemäße Verfahren zur Herstellung von Kartoffelteigformlingen so weiterzuentwickeln, dass es auch im industriellen Einsatz prozesssicher verwendet werden kann.

Diese Aufgabe wird mit einem Verfahren mit den Merkmalen des Patentanspruchs 1 gelöst.

Erfreulicherweise hat sich herausgestellt, dass die im Stand der Technik bevorzugten hohen Temperaturen weder notwendig noch prozessförderlich sind. Wenn die Kartoffelteigformlinge vor dem Verpacken bei unter 110 °C im Durchlauf gedämpft werden, entstehen Kartoffelteigformlinge, die genau die richtige Konsistenz und Formhaltigkeit aufweisen, damit der Verbraucher geschmacklich keinen wesentlichen Unterschied zu bekannten kugelförmigen Kartoffelteigklößen erkennt.

Im Rahmen dieser Beschreibung werden unter Kartoffelteigformlingen Kartoffelteigelemente verstanden, die eine von einer Kugel abweichende Form aufweisen und in der Regel kleiner sind als übliche Klöße. Hier geht es um Freiformen, Herzen oder Tierformen, die aus Kartoffelteig geformt, weiterbehandelt und verpackt werden können.

Die verwendeten Kartoffeln werden in der Regel vor dem Kochen, z.B. mit einem Dampfschäler geschält. Anschließend kann auf verschiedene Art und Weise der Teig hergestellt werden, aus dem dann die Kartoffelteigformlinge hergestellt werden. Das Dämpfen bei unter 110 °C im Durchlauf erlaubt das Weiterverarbeiten und Verpacken und letztlich die Zubereitung der Kartoffelteigformlinge beim Verbraucher.

Die Kartoffelteigformlinge erhalten durch das Dämpfen unter 110 °C im Durchlauf eine ausreichende Stabilität. Dadurch können sie die im Formprozess vorgegebene Form beibehalten. Der Verbraucher kann die Kartoffelteigformlinge kochen, erwärmen oder auf andere Weise zubereiten, sodass sie sich regenerieren und letztlich kurz vor dem Genuss eine lockere Konsistenz aufweisen.

Vorteilhaft ist es, wenn die Kartoffeln zum Erhitzen gedämpft werden. Temperatur und Dauer können dadurch genau auf die spätere Teigherstellung abgestimmt sein. Es hat sich herausgestellt, dass es ausreicht, die Kartoffeln nur auf Temperaturen zwischen 78 und 100 °C zu erhitzen.

Als besonders vorteilhaft hat es sich erwiesen, die Kartoffeln zwischen 10 Minuten und 50 Minuten und vorzugsweise etwa 30 Minuten bei 78 bis 98 °C und vorzugsweise bei etwa 80 bis 93 °C zu kochen oder zu dämpfen. Die Kartoffeln können dabei durchgekocht werden oder nur soweit gekocht werden, dass der Kartoffelteig auch ungekochte Kartoffelanteile enthält. Je nach Anforderungen an den Kartoffelteig können die Kartoffeln beispielsweise auch nicht ganz durchgekocht werden, sodass sie im Kern noch roh sind.

Die Kartoffeln können in einem Dämpfer gekocht werden. Als besonders vorteilhaft hat sich herausgestellt, die Kartoffeln in einem Schnecken-, Spiral- oder Bandkocher zu erhitzen. Je nach Einsatzzweck eignen sich auch Kombinationen dieser verschiedenen Kocharten.

Vorteilhaft ist es, wenn die Kartoffeln unmittelbar nach dem Kochen gekühlt werden. Hierzu kann beispielsweise eine Kühlschnecke mit Wasserkühlung verwendet werden.

Besonders vorteilhaft ist es, wenn die Kartoffeln nach dem Erhitzen in einem kontinuierlichen Durchlauf durch Kühlbereiche mit unterschiedlichen Temperaturen gekühlt werden.

Bei einem derartigen Verfahren ist es vorteilhaft, wenn die Kartoffeln nach dem Erhitzen zumindest in zwei Kühlbereichen mit unterschiedlichen Temperaturen unterschiedlich lang verweilen. In der Praxis sollten die Kartoffeln beim Kühlen in unterschiedlichen Temperaturzonen wie beispielsweise in drei Zonen mit unterschiedlichen Temperaturen verweilen. In einem kontinuierlichen Durchlauf zu kühlen heißt in einem kontinuierlichen Prozess zu kühlen, ohne die Kartoffeln oder zerkleinerte Kartoffeln in Chargen in großen Wannen von Kühlhaus zu Kühlhaus zu fahren. Dieser kontinuierliche Prozess kann beispielsweise durch einen Becherkühler nach dem Paternoster Prinzip erreicht werden oder es wird ein Bandkühler eingesetzt, bei dem das Band durch verschiedene Kühlbereiche läuft. Die Kühlbereiche mit unterschiedlichen Temperaturen führen dazu, dass die Kartoffeln Ruhephasen bei unterschiedlichen Temperaturen durchlaufen.

Vorteilhaft ist es, wenn die Kartoffeln nach dem erhitzen mit 70 °C +/- 5 °C Kerntemperatur dem ersten Kühlbereich zugeführt werden. Die Abkühlung auf 70 °C kann beispielsweise durch eine Kühlschnecke erfolgen.

In der Praxis hat sich als vorteilhaft erwiesen, wenn die Kartoffeln nach dem Erhitzen insgesamt etwa 90 Minuten +/- 30 Minuten gekühlt werden.

Daher wird besonders bevorzugt vorgeschlagen, dass die Kartoffeln nach dem Erhitzen in einem ersten Kühlbereich bei ca. 10 °C +/- 5 °C ca. 15 Minuten +/- 15 Minuten, dann in einem zweiten Kühlbereich bei ca. 8 °C +/- 5 °C ca. 15 Minuten +/- 15 Minuten und dann in einem dritten Kühlbereich bei ca. 2 bis 3 °C +/- 5 °C ca. 60 Minuten +/- 15 Minuten gekühlt werden.

Als vorteilhaft hat sich erwiesen, wenn die Kartoffeln bei der Kühlung in einem Kühlbereich mit einem Gas mit einer bestimmten Temperatur angeblasen werden.

Vorteilhaft ist es, wenn die Kartoffeln vor dem Kühlen eine Kerntemperatur von 65 -75 °C und nach dem Kühlen eine Kerntemperatur von 8 bis 15 °C aufweisen.

Die Kartoffeln können einerseits erst nach dem Kühlen zu einem Kartoffelteig zerkleinert werden. Die Kartoffeln können jedoch auch gekocht oder gedämpft und anschließend zerkleinert und erst dann gekühlt werden.

Wenn die heißen Kartoffeln für die Zerkleinerung beispielsweise mit einem Messer zerschnitten werden sollen, kann ein Schneidwolf verschmieren, wodurch die Zerkleinerung beeinträchtigt wird. Durch die große Oberfläche zerkleinerter Kartoffeln wird das Ausdampfen begünstigt, wodurch ein Verlust entsteht. Außerdem führt eine große Oberfläche zu einer stärkeren An- und Austrocknung. Daher werden die Kartoffeln in der Regel mittels rotierender Messer zerkleinert und durch eine Lochscheibe gepresst. Hierfür ist es vorteilhaft, wenn die Kartoffeln vorher bereits gekühlt wurden.

Die Kartoffeln können jedoch auch gekocht oder gedämpft, zerkleinert und dann gekühlt werden. Dabei ist es möglich, die Kartoffeln nicht nur zur Hälfte, sondern durchzukochen und in einem Separator zu zerkleinern und anschließend in einem Vakuummischer zu kühlen.

Unabhängig vom zuvor verwendeten Verfahren können die zerkleinerten Kartoffeln bei 8 bis 16 °C gemischt werden. Dem dabei entstehenden Teig können vor oder beim Mischen Speisesalz, Wasser, Kartoffelstärke, Kaliumsorbat, Zitronensäure und/oder Natriummetabisulfit zugegeben werden. Je nach Geschmack können auch Guarkernmehl, Gewürze oder andere Zutaten zugegeben werden.

Vorteilhaft ist es, wenn der Kartoffelteig vor der Herstellung der Kartoffelteigformlinge gekühlt wird. Hierfür kann der Kartoffelteig beispielsweise in einem Kühlhaus gelagert werden.

Je nach gewünschter Form der Kartoffelteigformlinge können diese durch Schneiden eines Stranges und/oder rotierende Lochplatten und/oder Koextrusion und/oder in Negativformen hergestellt werden. Ein derartiger Strang kann beispielsweise wie ein Spritzgebäck eine spezielle Außenkontur wie beispielsweise eine sternförmige Außenkontur oder die Außenkontur einer Ente aufweisen. Von diesem Strang abgeschnittene Schreiben können direkt als Kartoffelteigformlinge verwendet werden oder sie können in Negativformen eingelegt werden, um weiter geformt zu werden. Alternativ kann auch nur mittels einer Negativform ein Teigstück zu einem Kartoffelteigformling geformt werden.

Die Kartoffelteigformlinge können innerhalb einer Form und bevorzugt auch außerhalb einer Form erhitzt werden.

Besonders vorteilhaft ist es, wenn die Kartoffelteigformlinge vor dem Verpacken im Durchlauf erhitzt werden. Hierfür kann heiße Luft und/oder heißer Dampf verwendet werden.

Für das Erhitzen wird in einer bevorzugten Ausgestaltung des Verfahrens vorgesehen, dass die Kartoffelteigformlinge bei 95 bis 110 °C 1 bis 10 Minuten und vorzugsweise bei 98 °C 3 bis 6 Minuten gekocht oder gedämpft werden.

Vorteilhaft ist es, wenn die Kartoffelteigformlinge bei 80 % bis 100 % GG Dampfsättigung gekocht oder gedämpft werden.

In einem bevorzugten industriellen Verfahren werden die Kartoffelteigformlinge gekocht oder gedämpft bis sie eine Kerntemperatur von über 70 °C und vorzugsweise 70 bis 75 °C erreicht haben.

Es hat sich herausgestellt, dass es vorteilhaft ist, wenn der Wassergehalt der Kartoffelteigformlinge beim Kochen oder Dämpfen steigt und danach beim Abkühlen wieder um etwa den gleichen Wert sinkt. Dieser Wert liegt bei 1 bis 8 % GG und vorzugsweise zwischen 3 und 7 % GG als Zunahme und Abnahme.

Besonders vorteilhaft ist es, wenn die Kartoffelteigformlinge in einem Spiralkocher oder einem Bandkocher gekocht oder gedämpft werden.

Vorteilhaft ist es, wenn die Kartoffelteigformlinge nach dem Kochen 10 bis 25 Minuten +/- 5 Minuten ruhen.

Außerdem ist es vorteilhaft, wenn die Kartoffelteigformling bei -5 °C bis 15 °C und vorzugsweise bei 0 bis 10 °C gekühlt bzw. gefrostet werden.

Letztlich ist es vorteilhaft, wenn die Kartoffelteigformlinge unter Schutzgas verpackt werden.

Die so hergestellten Kartoffelteigformlinge können als verpackte Kartoffelteigformlinge in einem Kühlhaus oder Kühlregal gelagert werden, verpackt oder ausgepackt in einem Kochtopf, einer Pfanne, einem Ofen, einem Grill, einer Fritteuse oder einem Mikrowellenherd zubereitet werden und letztlich mit Genuss verzehrt werden.

Besonders vorteilhafte Verfahren sind in der Zeichnung dargestellt und werden im Folgenden beschrieben.

Es zeigt
- Figur 1: schematisch einen Verfahrensablauf für die Herstellung von Kartoffelteig halb und halb oder Kartoffelteig Seiden über Becherkühler,
- Figur 2: schematisch den Koch- und Kühlvorgang bei der Herstellung eines Seiden Separatorteiges über Separator und Vakuummischer und
- Figur 3: schematisch die Herstellung der Kartoffelteigformlinge..

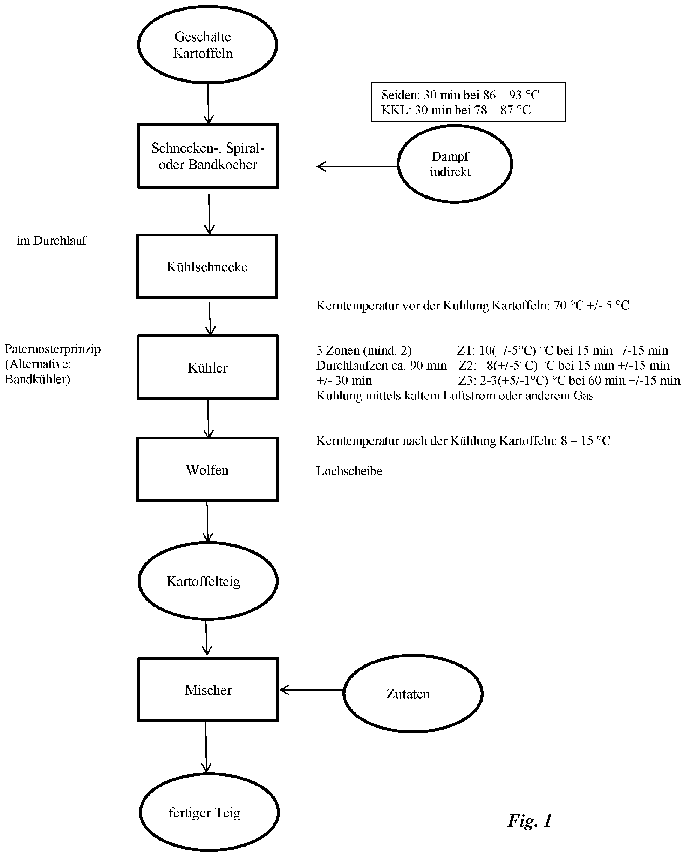

Für die Herstellung eines fertigen Teiges "halb und halb" werden die geschälten, rohen Kartoffeln mittels Schnecken, Spiral- oder Bandkocher bei 78 bis 87 °C für ca. 30 Minuten gekocht. Bei der Herstellung eines Seidenteiges werden die Kartoffeln bei 83 bis 95 oder 86 bis 93 °C für ca. 30 Minuten gekocht. Beides zeigt die Figur 1. Der Kocher wird bei beiden Verfahren mittels indirekten Dampfs beheizt.

Im unmittelbaren Fluss durchlaufen die Kartoffeln eine Kühlschnecke und werden dann an einen Kühler übergeben.

Der Kühler kann z. B. ein Bandkühler sein oder ein Becherkühler nach dem Paternosterprinzip. Unterschiedliche Verweildauern/Ruhephasen in definierten Temperaturzonen sorgen dafür, dass die Stärke in den Kartoffeln genügend Zeit für die Retrogradation (Rückbildung) hat.

Für die Kühlung durchlaufen die Kartoffeln mindestens zwei Zonen mit unterschiedlichen Temperaturen. In einem Beispiel werden 3 Zonen verwendet. In der ersten Zone wird auf 10 °C (+/- 5 °C) 15 Minuten (+/- 15 Minuten) abgekühlt. In der zweiten Zone wird auf 8 °C (+/- 5 °C) 15 Minuten (+/- 15 Minuten) abgekühlt und in der dritten Zone wird auf 2 bis 3 °C (+5/- 1 °C) 60 Minuten (+/- 15 Minuten) abgekühlt. Dabei wir mit einem kalten Luftstrom oder einem anderen Gas gekühlt.

Nachdem die Kartoffeln eine Kerntemperatur von 8 bis 15 °C aufweisen, werden diese durch eine Lochscheibe gewolft.

Der Kartoffelteig wird dann in einen Mischer gegeben und mit den nötigen Zutaten vermengt und anschließend der Formmaschine zugeführt.

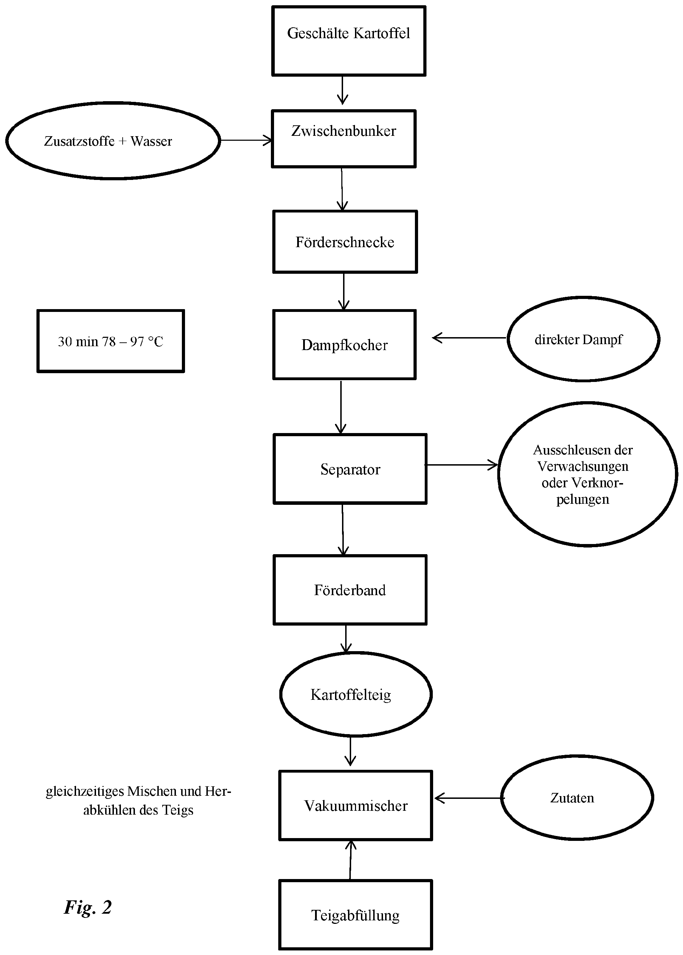

Die Figur 2 zeigt, dass für die Herstellung eines Seidenseparatorteiges die geschälten, rohen Kartoffeln in einem Bunker mit Wasserbad mit Zusatzstoffen zwischengelagert werden.

Anschließend werden die Kartoffeln mit einem Dampfschneckenkocher bei 78 bis 97 °C für ca. 30 Minuten gekocht. Der Kocher wird mittels direkten Dampfs beheizt.

Im unmittelbaren Fluss durchlaufen die gekochten Kartoffeln einen Separator. Dort werden die Kartoffeln zu einer breiigen Masse zerkleinert und gleichzeitig Festanteile (Kartoffelaugen oder Schalenanteile) separiert (ausgeschleust).

Mit einem Förderband wird der Kartoffelbrei an einen Vakuummischer übergeben. Zutaten werden beigeführt. Während des Mischvorganges im Vakuummischer wird dem Teig mittels Vakuum Wärme entzogen.

Anschließend wird der fertige Seidenteig der Formmaschine zugeführt oder kühl zwischengelagert.

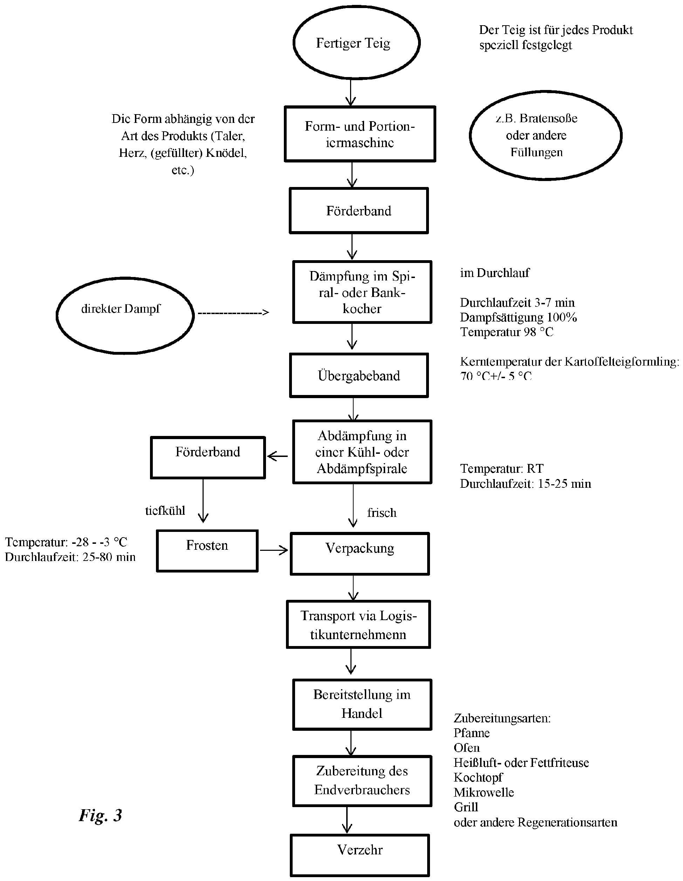

Beide in den vorbeschriebenen Verfahren erzeugten Kartoffelteige werden nun nach der Teigherstellung zur Herstellung von Kartoffelteigformlingen einem Form und Dämpfprozess zugeführt. Dabei wird der fertige Teig zunächst in den Trichter einer Formmaschine gefüllt. Je nach zu erzielender Form werden unterschiedliche Formprozesse eingesetzt (siehe Figur 3).

Für herzförmige Formlinge oder für Formlinge, wie man sie vom Plätzchen ausstechen kennt, erfolgt das Formen durch Strangpressen durch eine Matrize. Anschließend werden die Kartoffelteigformlinge mit einem Draht oder Messer abgeschnitten.

Für die Herstellung von talerförmigen Kartoffelformlingen erfolgt das Formen über rotierende Lochplatten, welche den Füllstrom abtrennen. Bei diesem Prozess kann auch eine 3D-Form hergestellt werden, um beispielsweise kleine Knödel herzustellen.

Nur für die Herstellung gefüllter Knödel wird der äußere Teigmantel mit der Innenfüllung zusammengeführt (Koextrusion). Die Formlinge werden dann mithilfe ineinandergreifender Finger abgetrennt.

Die auf unterschiedlichen Arten in Form- und Portioniermaschinen hergestellten Teigformlinge werden dann für die Dämpfung an einen Spiralkocher (Dämpfspirale) oder Bandkocher übergeben und dort im Durchlauf mittels direkten Dampfs bei 100 % Dampfsättigung mit Unterstützung einer Heizspirale bei 98 °C bis max. 110 °C gedämpft. Die Durchlaufzeit wird den jeweiligen Produkten angepasst (zwischen 2 und 40 Minuten und in der Regel zwischen 3 und 7 Minuten). Dabei sollte eine Kerntemperatur der Kartoffelteigformlinge von 70 °C +/- 5 °C erreicht werden.

Anschließend werden die Teigformlinge mittels eines Übergabebandes zur Abdämpfung in eine Kühl- oder Abdämpfspirale übergeben. Das Abdämpfen erfolgt im Durchlauf in einer Ruhephase von 10 bis 60 Minuten und in der Regel von 15 bis 25 Minuten.

Danach werden die Teigformlinge in einem Froster vorzugsweise für ca. 30 bis 50 Minuten an- oder durchgefrostet (je nach Produkt) oder in einem Kühlband abgekühlt und anschließend verpackt. Das Frosten kann bei -28 bis -3 °C in einer Zeit zwischen 25 und 80 Minuten erfolgen. Je nach Produkt kann dies in einer Tiefzieh-, Hartoder Weichschalenpackung oder in einem Folien-Schlauchbeutel erfolgen.

Es kann aber auch frische Ware hergestellt werden, die nicht gefrostet wurde. Dabei werden die Formlinge direkt nach der Abdämpfung verpackt.

Zur Zubereitung beim Endkonsumenten wird der Teigformling regeneriert. Dies bedeutet, dass das Produkt in einer Pfanne, einer Mikrowelle, im Backofen, in einer Heißluftfritteuse, in einer Fettfritteuse, in einem Dampfgarer, in einem Kochtopf oder auf einem Grill zubereitet wird und letztendlich mit Genuss verzehrt werden kann. Dies kann unter Umständen auch in einer dafür geeigneten Verpackung erfolgen.

## Patentansprüche

1. Verfahren zur Herstellung von Kartoffelteigformlingen
- bei dem Kartoffeln erhitzt werden,
- ein Teig hergestellt wird
- dem Teig vor oder beim Mischen Kartoffelstärke und Wasser zugegeben wird,
- aus dem Teig Kartoffelteigformlinge hergestellt werden und
- die Kartoffelteigformlinge verpackt werden,
***dadurch gekennzeichnet, dass*** die Kartoffelteigformlinge vor dem Verpacken bei unter 110 °C im Durchlauf gedämpft werden.

2. Verfahren nach Anspruch 1, ***dadurch gekennzeichnet, dass*** die Kartoffeln zwischen 10 Minuten und 50 Minuten und vorzugsweise etwa 30 Minuten bei 78 bis 98 °C und vorzugsweise bei etwa 80 bis 93 °C gedämpft werden.

3. Verfahren nach einem der vorhergehenden Ansprüche, ***dadurch gekennzeichnet, dass*** die Kartoffeln in einem Schnecken-, Spiral- oder Bandkocher erhitzt unmittelbar nach dem Kochen gekühlt werden.

4. Verfahren nach einem der Ansprüche 1 bis 3, ***dadurch gekennzeichnet, dass*** die Kartoffeln, nach dem Erhitzen in einem ersten Kühlbereich bei ca. 10 °C +/- 5 °C ca. 15 min +/- 15 min, dann in einem zweiten Kühlbereich bei ca. 8 °C +/- 5 °C ca. 15 min +/- 15 min und dann in einem dritten Kühlbereich bei ca. 2-3 °C +/- 5 °C ca. 60 min +/- 15 min gekühlt werden.

5. Verfahren nach einem der Ansprüche 3 oder 4, ***dadurch gekennzeichnet, dass*** die Kartoffeln vor dem Kühlen eine Kerntemperatur von 65 bis 75 °C und nach dem Kühlen eine Kerntemperatur von 8 bis 15 °C aufweisen.

6. Verfahren nach einem der vorhergehenden Ansprüche, ***dadurch gekennzeichnet, dass*** die zerkleinerten Kartoffeln bei 8 bis 16 °C zu einem Kartoffelteig gemischt werden und beim Mischen der zerkleinerten Kartoffeln die Temperatur mittels Vakuum abgesenkt wird.

7. Verfahren nach Anspruch 6, ***dadurch gekennzeichnet, dass*** dem Teig vor oder beim Mischen Speisesalz, Kaliumsorbat, Zitronensäure und/oder Natriummetabisulfit und oder weitere Zutaten zugegeben werden.

8. Verfahren nach einem der Ansprüche 6 oder7, ***dadurch gekennzeichnet, dass*** der Kartoffelteig vor der Herstellung der Kartoffelformlinge gekühlt wird.

9. Verfahren nach Anspruch 8, ***dadurch gekennzeichnet, dass*** der Teig vor der Herstellung der Formlinge mehrere Stunden und insbesondere 5 bis 15 Stunden ruht.

10. Verfahren nach einem der vorhergehenden Ansprüche, ***dadurch gekennzeichnet, dass*** die Kartoffelteigformlinge durch Schneiden eines Stranges und/oder rotierende Lochplatten und/oder Koextrusion und/oder in Negativformen hergestellt werden.

11. Verfahren nach einem der vorhergehenden Ansprüche, ***dadurch gekennzeichnet, dass*** die Kartoffelformteiglinge außerhalb einer Form erhitzt werden.

12. Verfahren nach einem der vorhergehenden Ansprüche, ***dadurch gekennzeichnet, dass*** die Kartoffelteigformlinge vor dem Verpacken im Durchlauf erhitzt werden.

13. Verfahren nach einem der vorhergehenden Ansprüche, ***dadurch gekennzeichnet, dass*** die Kartoffelteigformlinge bei 95 bis 110 °C 1 bis 10 Minuten und vorzugsweise bei 98 °C 3 bis 6 Minuten bei 80 % bis 100 % Dampfsättigung gedämpft werden bis sie eine Kerntemperatur von über 70 °C und vorzugsweise 70 bis 75 °C erreicht haben..

14. Verfahren nach einem der vorhergehenden Ansprüche, ***dadurch gekennzeichnet, dass*** der Wassergehalt der Kartoffelteigformlinge beim Kochen oder Dämpfen um etwa 3 bis 8 % GG steigt und danach beim Abkühlen wieder um etwa 3 bis 8 % GG sinkt.

15. Verfahren nach einem der vorhergehenden Ansprüche, ***dadurch gekennzeichnet, dass*** die Kartoffelteigformlinge nach dem Kochen und oder Dämpfen 10 bis 25 min +/- 5 min ruhen und bei -5 °C bis 15 °C und vorzugsweise bei 0 bis 10 °C gekühlt beziehungsweise gefrostet werden.
